Europäisches Patentamt

European Patent Office

Office européen des brevets

(11) Veröffentlichungsnummer: **0 458 105 A2**

## EUROPÄISCHE PATENTANMELDUNG

(21) Anmeldenummer: 91107176.9

(22) Anmeldetag: 03.05.91

(51) Int. Cl.⁵: **G01S 11/16**

(30) Priorität: 22.05.90 DE 4016458

(43) Veröffentlichungstag der Anmeldung:
27.11.91 Patentblatt 91/48

(84) Benannte Vertragsstaaten:
CH DE ES FR GB IT LI SE

(71) Anmelder: ROBERT BOSCH GmbH
Postfach 10 60 50
W-7000 Stuttgart 10(DE)

(72) Erfinder: Rapps, Peter

Am Pfinztor 11
W-7500 Karlsruhe 41(DE)
Erfinder: Winner, Hermann, Dr., Dipl.-Phys.
Im Mehl 3
W-7500 Karlsruhe 41(DE)
Erfinder: Noll, Martin, Dipl.-Phys
Nelkenstrasse 5
W-7555 Bietigheim(DE)
Erfinder: Fischer, Hans-Jürgen, Dr., Dr.-Ing.
Sensburger Ring 56 A
W-3200 Hildesheim(DE)

(54) System zur Abstandsmessung zwischen Kraftfahrzeugen.

(57) Bei einem System zur Abstandsmessung zwischen Kraftfahrzeugen sind zwischen zwei aufeinanderfolgenden Kraftfahrzeugen eine Übertragung von Informationen mittels elektromagnetischen Wellen in mindestens einer Richtung und eine Übertragung von akustischen Impulsen mindestens in entgegengesetzter Richtung vorgesehen. Die mittels elektromagnetischer Wellen übertragenen Informationen enthalten mindestens Informationen über den Empfangszeitpunkt des akustischen Impulses oder über aus dem Empfangszeitpunkt abgeleitete Informationen.

b)

Fig. 1

Die Erfindung geht aus von einem System zur Abstandsmessung nach der Gattung des Hauptanspruchs.

Zur Verhinderung von Auffahrunfällen sind verschiedene Abstands- und Warnsysteme bekanntgeworden, bei denen durch Laufzeitmessung von in Fahrtrichtung ausgesandten und am vorausfahrenden Fahrzeug reflektierten Wellen der Abstand ermittelt wird. Bei diesen bekannten Systemen ist jedoch die in Richtung auf den Empfänger reflektierte Strahlungsenergie abhängig von der Beschaffenheit des vorausfahrenden Fahrzeugs (dessen Form und Werkstoff) und der Lage der Fahrzeuge zueinander (Kurvenfahren). Bei ungünstigen Reflektionsbedingungen haben die bekannten Systeme daher nur eine Reichweite, die zur rechtzeitigen Warnung des Fahrers bzw. Einleitung von Bremsmanövern zu kurz ist.

Diese Nachteile versucht eine bekannte Abstandsmeß- und Warnvorrichtung, insbesondere für Kraftfahrzeuge (DE 27 04 178 A1) dadurch zu vermeiden, daß die Laufzeitdifferenz zweier über eine am Heck eines Fahrzeugs montierte Sendeeinrichtung ausgestrahlter Signale von einer am Vorderteil eines am Fahrzeug montierten Empfangseinrichtung aufgenommen dazu verwandt wird, den Abstand zwischen den beiden Fahrzeugen zu messen.

Bei dieser bekannten Vorrichtung werden zwar die durch die unzureichende Reflektion bedingten Nachteile vermieden, es treten jedoch andere Nachteile auf - beispielsweise dann, wenn Impulse von anderen Sendern, beispielsweise von in der Nähe fahrenden dritten Fahrzeugen, empfangen werden.

Aufgabe der vorliegenden Erfindung ist es, ein System zur Abstandsmessung zwischen Kraftfahrzeugen vorzuschlagen, das bei einer ausreichenden Reichweite eine sichere Messung gestattet.

Das erfindungsgemäße System mit den kennzeichnenden Merkmalen des Hauptanspruchs hat den Vorteil, daß es weitgehend unabhängig von Störeinflüssen arbeitet. Ferner ist eine Übertragung weiterer Informationen im Rahmen des erfindungsgemäßen Systems möglich. So kann beispielsweise die Geschwindigkeit eines vorausfahrenden Fahrzeugs bei einer Auswertung der Ergebnisse der Abstandsmessung berücksichtigt werden. Gegebenenfalls kann auch eine Informationsübertragung zu mehr als zwei Fahrzeugen vorgenommen werden. Schließlich ist eine Einbindung in ein übergeordnetes Kommunikationssystem, welches auch ortsfeste Sender bzw. Empfänger umfaßt, möglich.

Durch die in den Unteransprüchen aufgeführten Maßnahmen sind vorteilhafte Weiterbildungen und Verbesserungen der im Hauptanspruch angegebenen Erfindung möglich.

Einige dieser Weiterbildungen betreffen vorteilhafte Anordnungen der Sender bzw. Empfänger am Kraftfahrzeug. Andere Weiterbildungen betreffen Einzelheiten bei der Informationsübertragung. So kann beispielsweise eine Übertragung der Informationen an weitere Kraftfahrzeuge durch ungerichtete Sender und Empfänger oder dadurch erfolgen, daß die jeweils von einem Kraftfahrzeug empfangenen Informationen mindestens teilweise an das in der Kolonne folgende weitergereicht werden.

Eine deutliche Erhöhung der Sicherheit gegenüber Störsignalen wird durch eine Codierung der akustischen Impulse erzielt. Besonders vorteilhaft ist dabei eine Codierung, die sich in Abhängigkeit von denen mittels der elektromagnetischen Wellen übertragenen Informationen ändert.

Andere Weiterbildungen der Erfindung beziehen sich auf eine bidirektionale Übertragung der Informationen. Außerdem kann das erfindungsgemäße System mit einer weiteren Empfangseinrichtung zur Auswertung von reflektierten Ultraschallwellen ausgerüstet sein.

Sofern die Lichtsender und Lichtempfänger hinter Glasflächen angeordnet sind, kann das erfindungsgemäße System mit Einrichtungen zum Sensieren von Schmutz und/oder Feuchtigkeit kombiniert werden.

Ausführungsbeispiele der Erfindung sind in der Zeichnung anhand mehrerer Figuren dargestellt und in der nachfolgenden Beschreibung näher erläutert. Es zeigt:

Fig. 1    eine schematische Darstellung zweier Fahrzeuge, die mit einem erfindungsgemäßen System ausgerüstet sind,

Fig. 2    ein Blockschaltbild eines ersten Ausführungsbeispiels,

Fig. 3    ein Blockschaltbild eines zweiten Ausführungsbeispiels,

Fig. 4    eine schematische Darstellung eines Protokolls eines Funkdatensystems,

Fig. 5    Gruppen von Kraftfahrzeugen, zwischen denen jeweils ein Datenaustausch stattfindet, und

Fig. 6    die Ausstattung eines Kraftfahrzeugs mit mehreren Ultraschallsensoren.

Gleiche Teile sind in den Figuren mit gleichen Bezugszeichen versehen.

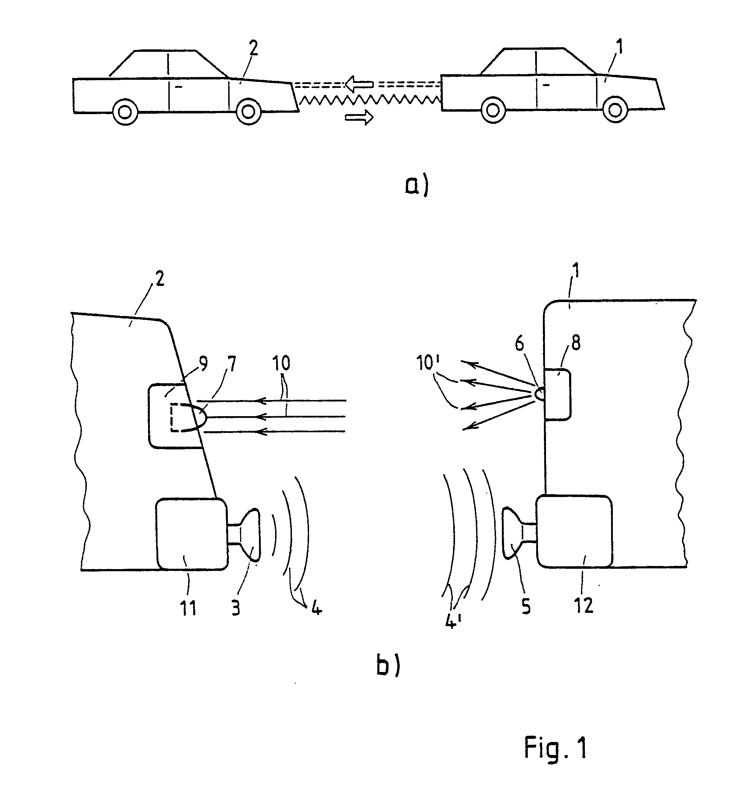

Fig. 1 zeigt zwei hintereinander fahrende Kraftfahrzeuge 1, 2, welche mit einem erfindungsgemäßen System ausgerüstet sind, wobei die Heckpartie des Kraftfahrzeugs 1 und die Frontpartie des Kraftfahrzeugs 2 in Fig. 1b) vergrößert dargestellt sind. Das vorausfahrende Kraftfahrzeug 1 weist einen Infrarotsender 6 auf, der eine gerichtete Infrarotstrahlung 10' entgegen der Fahrtrichtung aussendet. Davon wird ein kleiner Teil 10 von einem Infrarotempfänger 7 am Kraftfahrzeug 2 empfangen. Der Infrarotsender 6 ist in einen Rückscheinwerfer 8 integriert, während der Infrarotempfänger 7 in einen Scheinwerfer 9 eingebaut ist.

Im Bereich der Stoßstange 11 des Kraftfahrzeugs 2 befindet sich ein Ultraschallsender, der Ultraschallwellen 4 in Fahrtrichtung aussendet. Die beim vorausfahrenden Kraftfahrzeug 1 ankommenden Ultraschallwellen 4' werden vom Ultraschallempfänger 5 in elektrische Signale umgewandelt. Der Ultraschallempfänger 5 ist zweckmäßigerweise in den hinteren Stoßfänger 12 des Kraftfahrzeugs 1 integriert.

Es versteht sich von selbst, daß auch das Kraftfahrzeug 1 vorne wie das Kraftfahrzeug 2 ausgerüstet ist und daß das Kraftfahrzeug 2 entsprechende Einrichtungen am Heck aufweist.

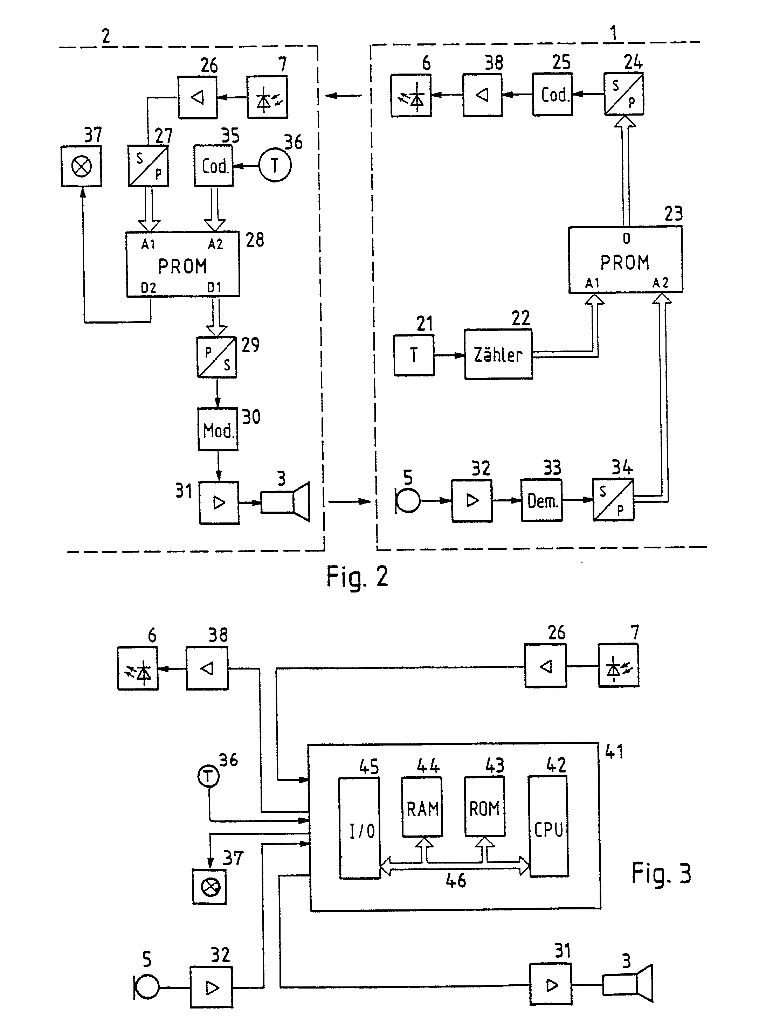

Die weitere Erläuterung der Erfindung erfolgt anhand des Blockschaltbilds gemäß Fig. 2, das lediglich eine von vielen möglichen Ausführungsformen der Erfindung darstellt. Ein Infrarotsender 6, ein Infrarotempfänger 7, ein Ultraschallsender 3 und ein Ultraschallempfänger 5 sind entsprechend Fig. 1 angeordnet. Der Infrarotsender 6 sendet codierte Signale aus, welche einerseits zur Synchronisation des Ultraschallsenders 3 und andererseits zur Übertragung der Abstandsinformation dienen. Zur Erzeugung dieser Signale ist zunächst ein Taktgenerator 21 vorgesehen, dessen Ausgangssignal einen Binärzähler 22 taktet. Der Ausgang des Binärzählers 22 ist mit einem Teil A1 der Binärstellen des Adresseneingangs eines Nur-Lese-Speichers 23 verbunden, an dessen Datenausgang D ein Parallel-Seriell-Wandler 24 angeschlossen ist. Die seriellen Signale gelangen über einen geeigneten Coder 25 und eine Endstufe 38 zum Infrarotsender 6. Der Coder 25 codiert die seriellen Signale in eine für den Übertragungskanal geeignete Form.

Die von dem Infrarotempfänger 7 empfangenen Signale werden nach ihrer Umwandlung in elektrische Signale zunächst in einem Verstärker 26 verstärkt und bei 27 in Parallelsignale umgewandelt. Diese werden einem weiteren Nur-Lese-Speicher (PROM) 28 zugeführt. Mehrere Binärstellen D1 des Datenausgangs des Nur-Lese-Speichers 28 sind über einen Parallel-Seriell-Wandler 29 an einen Modulator 30 angeschlossen, dessen Ausgangssignale über eine Leistungsstufe 31 dem Ultraschallsender zugeführt werden.

Die Ausgangssignale des Ultraschallempfängers 5 werden zunächst über einen Vorverstärker 32 einem Demodulator 33 zugeführt und dann bei 34 in serielle Signale umgewandelt, welche weiteren Adresseneingängen A2 des Nur-Lese-Speichers 23 zugeleitet werden.

Der Nur-Lese-Speicher 28 weist weitere Adresseneingänge A2 auf, an die über einen entsprechenden Coder 35 Ausgangssignale des Tachometers 36 des nachfolgenden Fahrzeugs 2 angelegt werden. Eine weitere Binärstelle D2 des Datenausgangs des Nur-Lese-Speichers 28 ist mit dem Eingang einer Warneinrichtung 37 verbunden, die eine akustische und/oder optische Anzeigevorrichtung aufweisen kann. Zusätzlich kann ein Eingriff in das Bremssystem des nachfolgenden Fahrzeugs 2 vorgesehen sein.

Durch eine entsprechende Programmierung des Nur-Lese-Speichers 23 wird beispielsweise bewirkt, daß bei einem Zählerstand des Zählers 22 von "0" unabhängig von dem Wert der weiteren Binärstellen A2 der Adressen am Datenausgang D des Nur-Lese-Speichers 23 ein gegebener Wert anliegt, der als Code zum nachfolgenden Fahrzeug übertragen wird. Dort wird im Nur-Lese-Speicher 28 dieser Code als solcher erkannt, und dem Parallel-Seriell-Wandler 29 zugeführt, was ein Aussenden entsprechend codierter Ultraschallsignale zur Folge hat. Inzwischen wird durch die Taktimpulse des Taktgebers 21 der Zähler 22 fortlaufend inkrementiert. Unter den sich dann ergebenden Adressen sind im Nur-Lese-Speicher 23 jedoch nur "0"-Informationen abgelegt.

Erst, wenn der zuvor beim Zählerstand von "0" erzeugte Wert als Code wieder empfangen wird und zu den weiteren Binärstellen A2 des Adresseneingangs des Nur-Lese-Speichers 23 gelangt, wird der dann vorhandene Zählerstand vom Datenausgang D des Nur-Lese-Speichers 23 über den Seriell-Parallel-Wandler 24, den Coder 25, die Infrarot-Übertragungsstrecke 6, 7, den Vorverstärker 26 und den Seriell-Parallel-Wandler 27 zum PROM 28 im nachfolgenden Fahrzeug 2 übertragen. Dieser Wert weicht von dem als Code übertragenen Wert ab und stellt eine Laufzeitinformation und somit eine Abstandsinformation dar. Durch eine entsprechende Codierung des Nur-Lese-Speichers 23 wird diese Abstandsinformation in geeigneter Weise mit der vom Tachometer 36 enthaltenen Geschwindigkeitsinformation verglichen und im Falle eines zu geringen Abstands zur Anzeige gebracht.

Während das Ausführungsbeispiel nach Fig. 2 im wesentlichen in Hinblick auf eine anschauliche Darstellung einiger Funktionen des erfindungsgemäßen Systems gewählt wurde, bezieht sich die Darstellung gemäß Fig. 3 auf eine an sich preiswertere und flexiblere Realisierung mit Hilfe eines Mikrocomputers 41. Dabei kann der Mikrocomputer 41 sowohl die nach vorn als auch die nach hinten gerichtete Kommunikation steuern und je nach Ausführung im einzelnen die Funktionen der Seriell-Parallel-Wandlung, der Codierung und der Modulation vornehmen. Es sind daher in Fig. 3 außer dem Mikrocomputer 41 lediglich die Teile 3, 7, 31, 26 im Frontbereich des Kraftfahrzeugs sowie die Teile 5, 6, 32, 38 im Heckbereich dargestellt. Der Mikrocomputer selbst besteht in an sich bekannter Weise im wesentlichen aus einer CPU 42, einem Nur-Lese-Speicher 43, einem Schreib-Lese-Speicher 44 und einer Ein/Ausgabeeinheit 45, welche miteinander durch ein Bussystem 46 verbunden sind.

Auch bei dem Ausführungsbeispiel nach Fig. 3 wird die vom Tachometer 36 erhaltene Geschwindigkeitsinformation ausgewertet und gegebenenfalls eine Warneinrichtung 37 angesteuert.

Der Ablauf der Abstandsmessung und der Übertragung der Informationen kann an sich genauso wie beim Ausführungsbeispiel nach Fig. 2 erfolgen. Bei einer Weiterbildung der Erfindung können jedoch noch weitere Funktionen übernommen werden. Insbesondere können mit Hilfe des Infrarotsenders 6 Informationen an das nachfolgende Fahrzeug übertragen werden, welche sich nicht nur auf die Abstandsmessung zu dem nachfolgenden Fahrzeug beziehen. Abgesehen von der Geschwindigkeit des eigenen Fahrzeugs können Informationen an das nachfolgende Fahrzeug übertragen werden, welche sich auf die Abstandsmessung und/oder die Geschwindigkeit eines oder mehrerer vorausfahrender Fahrzeuge beziehen. Auf diese Weise können "vorausschauend" gefährliche Situationen erkannt werden. So können beispielsweise in einem Fahrzeug bereits Maßnahmen ergriffen werden, wenn ein um mehrere Fahrzeuge vorausfahrendes Fahrzeug einen sehr geringen Abstand einhält und/oder scharf bremst.

Obwohl auch bei diesem Ausführungsbeispiel eine uncodierte Aussendung der akustischen Impulse möglich ist, stellt eine codierte akustische Impulsfolge sicher, daß die Messung sich auf zwei nacheinander fahrende Fahrzeuge bezieht und nicht durch Empfang von reflektierten Schallwellen verfälscht wird.

Die Erfindung kann in vorteilhafter Weise auch mit einer Abstandsmessung nach dem Reflektionsverfahren derart kombiniert sein, daß die mit Hilfe der elektromagnetischen Wellen bzw. des Infrarotstrahls übertragene Information des einfachen Abstands mit dem Meßergebnis der Reflektionsmessung verglichen wird.

In Weiterbildung der Erfindung kann die Abstandsmessung mittels akustischer Impulse auch mit Funk-Datensystemen kombiniert werden, bei welchen ein Informationsaustausch zwischen mehreren Kraftfahrzeugen stattfindet. Derartige Systeme sind beispielsweise im Rahmen des Forschungsprojekts Prometheus vorgeschlagen worden. Dabei erfolgt die Übertragung im Zeitschlitz-Multiplex, beispielsweise nach einem Protokoll, das von J. Kalkwasser, F. Reichert, Th. Hellmich und B. Walke in "CSAP 2 - A Mobile Network Media Access Protocol" in den PROMETHEUS-Proceedings zum 2. Workshop in Stockholm 1989 beschrieben wurde. Dabei ist die zur Verfügung stehende Sendezeit in Overframes aufgeteilt, die aus einzelnen Frames bestehen, die wiederum aus einzelnen Slots zusammengesetzt sind. Durch an sich bekannte Verfahren wird sichergestellt, daß jeder Sender nur in einem der Slots sendet, welchen die anderen Sender dann als reserviert erkennen. Im Falle einer Kollision wird in einem anderen Slot ein weiterer Sendeversuch unternommen.

In einem Slot werden dann nacheinander den Zugriff steuernde Daten, eine Adresse, Benutzerdaten und schließlich Prüfdaten übertragen, wobei am Anfang und am Ende des Slots je eine Synchronisationsreserve vorgesehen ist. Ein zur Kommunikation zwischen Fahrzeugen vorgesehenes Zeitschlitz-Multiplex-System weist eine Datenrate von > 1Mbit/s auf, wobei jeweils für ein Fahrzeug ein Slot mit 400 Brutto- bzw. 200 Nettobits vorgesehen ist. Ein Frame umfaßt circa 120 Slots, so daß maximal 120 Fahrzeuge gleichzeitig am Datenaustausch teilnehmen können. Innerhalb eines Overframes werden die Benutzerdaten multiplexiert. Die Overframes werden mit einer Frequenz von etwa 1 bis 5 Hz wiederholt.

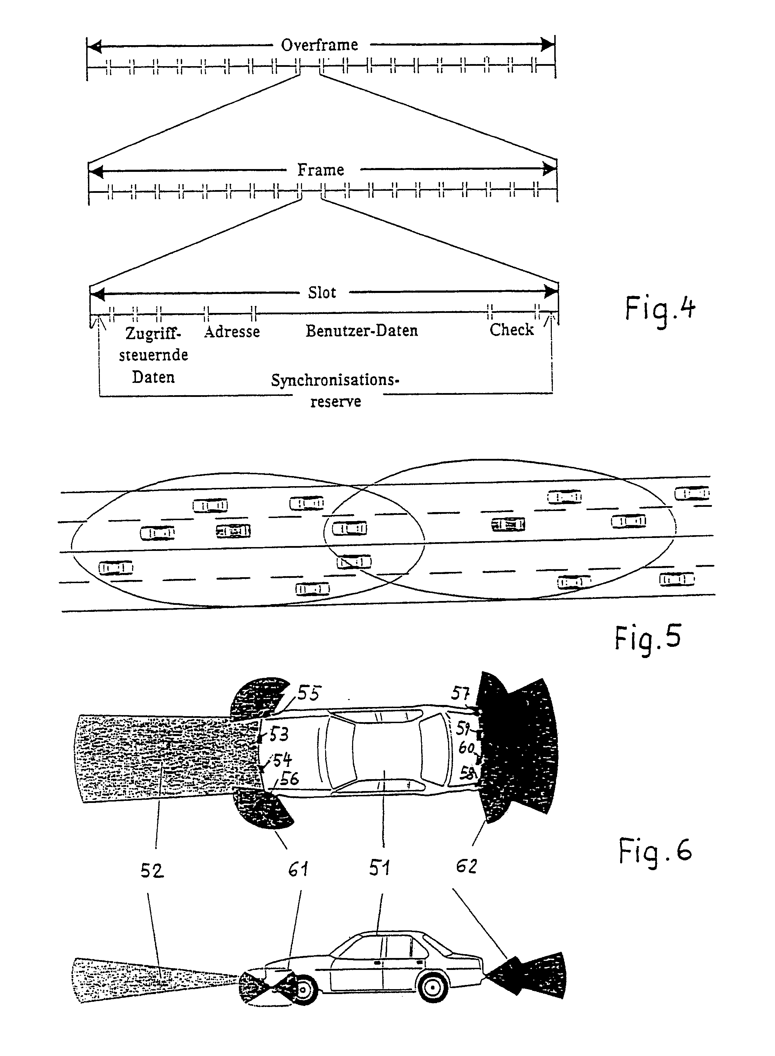

Durch die Verwendung von Radiowellen im Bereich von 1 bis 80 GHz, entsprechenden Sendeleistungen und Antennen ergeben sich Reichweiten von circa 500 m longitudinal und 50 m lateral. Somit können von jeweils einem Fahrzeug aus gesehen, das in Fig. 5 dunkel dargestellt ist, Fahrzeuge erfaßt werden, die auf der gleichen Straße verkehren und sich bis zu etwa 250 m vor und hinter dem Fahrzeug befinden. Diese Fahrzeuge sind in Fig. 5 jeweils durch eine geschlossene Linie gekennzeichnet und bilden einen dynamischen Cluster.

Für die Kombination mit der Abstandsmessung mittels Ultraschallimpulsen sind zwei Varianten möglich - ohne und mit Ultraschallcodierung.

Erfolgt keine Codierung der Ultraschallimpulse, so erhalten die Fahrzeuge nach einem gemeinsamen Schlüssel Senderechte für die Ultraschallimpulse, so daß innerhalb einer Ultraschallwirkungszone - etwa zweifache Reichweite - nur ein Fahrzeug zur gleichen Zeit sendet. Die Sendeberechtigung gilt etwa für die Ausbreitungszeit für die zweifache Reichweite - in der Praxis etwa 100 bis 200 ms. Vorteilhaft ist, daß hierbei ein einfaches Ultraschallsystem verwendet werden kann.

Wegen einer geringeren Störsicherheit und einer relativ kleinen Meßfrequenz und auch wegen eines relativ aufwendigen Verteilungsalgorithmus bei dem Senderecht bei der Anwendung uncodierter Ultraschallimpulse erscheint eine Codierung der Ultraschallimpulse vorteilhafter. Dabei sendet jedes Fahrzeug innerhalb des obengenannten Zeitraums, der einen Ultraschall-Overframe darstellt, eine codierte Impulsfolge, die beispielsweise von der aktuellen Nummer des Slots (Fig. 4) abgeleitet ist. Dadurch ist innerhalb des dynamischen Clusters eine Eindeutigkeit gewährleistet - im Sinne einer Zuordnung des Codes zu einem Fahrzeug. Der genaue Zeitpunkt der Aussendung des Ultraschallimpulses bezogen auf den Anfang eines Ultraschall-Overframes kann entsprechend einer Zufallsfolge variiert werden und anderen Teilnehmern innerhalb der Benutzerdaten (Fig. 4) bekannt gemacht werden.

Jedes Fahrzeug registriert unabhängig alle ankommenden Ultraschallimpulsfolgen, decodiert diese und berechnet den Abstand zum jeweiligen Sender. Die Abstände (bis zu sechs verschiedene) werden dann innerhalb der Benutzerdaten an alle Clusterteilnehmer übertragen. Durch die variablen Sendezeitpunkte ergibt sich eine hohe Zuverlässigkeit der Abstandsmessung. Dabei ist außerdem ein bidirektionales Transponderprinzip zur Abstandsmessung möglich, bei welchem die Ultraschallstrecke in beiden Richtungen durchlaufen wird. Schließlich ermöglicht dieses System eine hohe wiederholfrequenz der Messungen, da innerhalb eines Ultraschall-Overframes jeder Sender (Fahrzeug) senden darf. Diese Vorteile werden jedoch mit einem gewissen Aufwand zur Codierung der Ultraschallimpulse erkauft.

Zur Erläuterung dessen, daß das erfindungsgemäße System mit weiteren Ultraschallsensoren kombinierbar ist, zeigt Fig. 6 schematisch die Ausstattung eines Kraftfahrzeugs 51 mit mehreren Ultraschallsensoren. Dabei ist der Wirkungs- bzw. Warnbereich 52 zur Abstandsmessung gemäß der Erfindung hell schraffiert und wird von zwei stark bündelnden Sensoren 53, 54, die je nach Ausführungsform der Erfindung Sender, Empfänger oder Sender/Empfänger sein können, gewährleistet.

Weitere Sensoren 55, 56, 57, 58 sind an den Ecken des Fahrzeugs angeordnet, während zwei Sensoren 59, 60 nach hinten gerichtet sind. Die Sensoren 55 bis 60 dienen insbesondere als Einparkhilfe, wobei die Sensoren 55 bis 58 an den Ecken des Fahrzeuges eine sehr breite Richtcharakteristik 61, 62 aufweisen, so daß auch seitliche Bewegungen des Fahrzeugs (bei eingeschlagenen Rädern) berücksichtigt werden. Die verschiedenen Sensoren können einzeln, teil- oder vollsynchron angesteuert werden. Ein Mikrocomputer-Steuergerät kann die empfangenen Impulse decodieren und den Abstand aus Echoimpulsen berechnen.

**Patentansprüche**

1. System zur Abstandsmessung zwischen Kraftfahrzeugen, dadurch gekennzeichnet, daß zwischen zwei aufeinanderfolgenden Kraftfahrzeugen eine Übertragung von Informationen mittels elektromagnetischen Wellen in mindestens einer Richtung und eine Übertragung von akustischen Impulsen mindestens in entgegengesetzter Richtung vorgesehen sind und daß die mittels elektromagnetischer Wellen übertragenen Informationen mindestens Informationen über den Empfangszeitpunkt des akustischen Impulses oder über aus dem Empfangszeitpunkt abgeleitete Informationen enthalten.

2. System nach Anspruch 1, dadurch gekennzeichnet, daß an Frontseiten von Kraftfahrzeugen ein Ultraschallsender (3) und ein Empfänger (7) für elektromagnetische Wellen und an Rückseiten von Kraftfahrzeugen ein Ultraschallempfänger (5) und ein Sender (6) für elektromagnetische Wellen angeordnet sind.

3. System nach Anspruch 1, dadurch gekennzeichnet, daß mittels der elektromagnetischen Wellen der Zeitpunkt des Eintreffens eines akustischen Impulses von einem Kraftfahrzeug zum anderen übertragen wird und daß im anderen Fahrzeug der Abstand berechnet wird.

4. System nach Anspruch 1, dadurch gekennzeichnet, daß in demjenigen Kraftfahrzeug, welches einen akustischen Impuls empfängt, der Abstand berechnet wird und daß der berechnete Wert für den Abstand mittels elektromagnetischer Wellen zum anderen Kraftfahrzeug übertragen wird.

5. System nach Anspruch 1, dadurch gekennzeichnet, daß zur Übertragung mittels elektromagnetischer Wellen ein Lichtsender (6) und ein Lichtempfänger (7) vorzugsweise im Infrarotbereich vorgesehen sind.

6. System nach Anspruch 5, dadurch gekennzeichnet, daß der Lichtsender (6) in einem Rückfahrscheinwerfer (8) angeordnet ist.

7. System nach Anspruch 5, dadurch gekennzeichnet, daß der Lichtempfänger (7) in einem Scheinwerfergehäuse (9) angeordnet ist.

8. System nach Anspruch 1, dadurch gekennzeichnet, daß der Ultraschallsender (3) und der Ultraschallempfänger (5) in Stoßfängern (11, 12) angeordnet sind.

9. System nach Anspruch 1, dadurch gekennzeichnet, daß weitere Informationen mittels der elektromagnetischen Wellen übertragen werden.

10. System nach Anspruch 9, dadurch gekennzeichnet, daß die Sender und Empfänger für elektromagnetische Wellen derart ausgebildet sind, daß eine Übertragung von Informationen aus und zu weiteren Kraftfahrzeugen möglich ist.

11. System nach Anspruch 10, dadurch gekennzeichnet, daß zur Übertragung der Informationen Multiplex- oder Zeitschlitzverfahren angewendet werden.

12. System nach Anspruch 9, dadurch gekennzeichnet, daß Informationen, die von dem Empfänger elektromagnetischer Wellen eines Kraftfahrzeugs empfangen werden, mindestens teilweise vom Sender für elektromagnetische Wellen des gleichen Kraftfahrzeugs an dritte Fahrzeuge abgestrahlt werden.

13. System nach Anspruch 1, dadurch gekennzeichnet, daß die akustischen Impulse codiert sind.

14. System nach Anspruch 13, dadurch gekennzeichnet, daß zur Codierung der akustischen Impulse ein veränderlicher Code vorgesehen ist, der in Abhängigkeit von den mittels elektromagnetischer Wellen übertragenen Informationen wählbar ist.

15. System nach Anspruch 11, dadurch gekennzeichnet, daß zu Fahrzeugen, welche von einer Übertragung der Informationen mit einem Multiplex- oder Zeitschlitzverfahren erfaßt sind, zu verschiedenen Zeitpunkten Signale zur Aussendung des akustischen Impulses übertragen werden.

16. System nach Anspruch 11, dadurch gekennzeichnet, daß zu Fahrzeugen, welche von einer Übertragung der Informationen mit einem Multiplex- oder Zeitschlitzverfahren erfaßt sind, quasi gleichzeitig Signale zur Aussendung von codierten akustischen Impulsen übertragen werden, wobei die akustischen Impulse verschiedener Fahrzeuge verschieden codiert sind.

17. System nach Anspruch 2, dadurch gekennzeichnet, daß der Ultraschallsendor auch als Ultraschallempfänger dient und daß eine Einrichtung vorgesehen ist zur Errechnung des Abstands zu einem vor dem Kraftfahrzeug empfindlichen Gegenstand, an welchem die Ultraschallwellen reflektiert werden.

18. System nach Anspruch 17, dadurch gekennzeichnet, daß der aufgrund der Reflektion errechnete Wert für den Abstand mit der mittels elektromagnetischer Wellen empfangenen Information verglichen wird.

19. System nach Anspruch 1, dadurch gekennzeichnet, daß im Zusammenhang mit Lichtsendern und Lichtempfängern, welche hinter Glasflächen angeordnet sind, Einrichtungen zum Sensieren von Schmutz und/oder Feuchtigkeit vorgesehen sind.

a)

b)

Fig. 1

Fig. 2

Fig. 3

Fig.4

Fig.5

Fig.6